# EUROPÄISCHE PATENTSCHRIFT

(11) **EP 1 270 355 B1**
(45) Veröffentlichungstag und Bekanntmachung des Hinweises auf die Patenterteilung: **26.04.2006**
(21) Anmeldenummer: 02012423.6
(22) Anmeldetag: 10.06.2002
(51) Int. Cl.: B60T 17/08, F16D 65/32, B60T 13/38, B60T 13/26, B60T 13/22

(54) **Federspeicherkolben für Federspeicherbremszylinder**
Spring-loaded piston for brake spring-loaded cylinder
Piston d'accumulateur d'énergie à ressort pour un cylindre de freins à ressort accumulateur

(30) Priorität: 25.06.2001 DE 10130543
(43) Veröffentlichungstag der Anmeldung: 02.01.2003
(73) Patentinhaber: KNORR-BREMSE SYSTEME FÜR NUTZFAHRZEUGE GMBH, 80809 München (DE)
(72) Erfinder: Gravier, Damien, 81476 München (DE); Derouault, Sylvain, 14100 Hermival les Vaux (FR)

(56) Entgegenhaltungen:
- WO-A-97/18117
- DE-A- 4 012 993
- US-A- 4 056 043

## Beschreibung

Die vorliegende Erfindung betrifft einen Federspeicherbremszylinder mit einem Federspeicherkolben, welcher aus Kunststoff hergestellt und mit einer separaten Kolbenstange oder einem separaten Kolben verbunden ist, gemäß dem Oberbegriff von Anspruch 1.

Aus der Praxis sind Betriebsbrems-, Federspeicherbrems-, sowie häufig als Kombizylinder bezeichnete kombinierte Betriebsbrems- und Federspeicherbremszylinder bekannt. Derartige Bremszylinder dienen zur Betätigung von Bremsanlagen von Fahrzeugen, insbesondere von Nutzfahrzeugen. Bei den aus der Praxis bekannten, reinen Federspeicherbremszylindern wirkt eine vorgespannte Speicherfeder über einen Federspeicherkolben auf eine Kolbenstange, so dass im Einsatzfall eine Bremse betätigt werden kann. Der Betriebsbremsteil eines Betriebsbremszylinders oder auch eines Kombizylinders enthält bei den aus der Praxis bekannten Bremszylindern im allgemeinen eine durch Druckluft beaufschlagbare Membran, welche gegenüber einem Teller und einem mit dem Teller verbundenen Betätigungsstößel wirkt. Bei einem Kombizylinder ist der Federspeicherbremsteil dem Betriebsbremsteil aufgesattelt. Ein solcher aufgesattelter Federspeicherbremsteil ist beispielsweise in der DE 198 30 154 A1 beschrieben. Hier wirkt eine Kolbenstange des Federspeicherbremsteils, welche mit dem Federspeicherkolben verbunden ist, bei Betätigung durch die Speicherfeder auf die Membran des Betriebsbremszylinders ein und überträgt mittels des Tellers des Betriebsbremszylinders die Federspeicherbremskraft auf den Betätigungsstößel. Die Speicherfeder wird hierfür zuvor gespannt, wenn die Federspeicherkammer mit Druckluft beaufschlagt wird.

Derartige Federspeicherbremszylinder weisen einen aus Aluminium oder Zink gegossenen Federspeicherkolben auf. Diese Gussteile haben jedoch den wesentlichen Nachteil, dass nach dem Gießen regelmäßig Nachbearbeitungsschritte zur Entfemung von etwaigen Graten oder zur Vergleichmäßigung von Oberflächen notwendig sind. Ferner müssen häufig benötigte Bohrungen für Befestigungsmittel beispielsweise spanabhebend eingebracht oder Sitzflächen für Dichtungs- oder Gleitringe oder dergleichen eingearbeitet werden. Darüber hinaus haben diese aus Aluminium oder Zink hergestellten Federspeicherkolben den Nachteil, dass sie aufgrund von nicht gänzlich vermeidbarer Feuchtigkeit Korrosion oder ähnlichen Alterungsprozessen ausgesetzt sind, die schlussendlich zu Fehlfunktionen führen können. Zuletzt ist die Herstellung von Federspeicherkolben als Aluminium- oder Zinkgussteil relativ teuer, wobei weiter nachteilig hinzukommt, dass die Gussformen einem hohen Verschleiß unterworfen und damit nur begrenzte Stückzahlen herstellbar sind.

Zudem sind die aus der Praxis bekannten Federspeicherkolben mit der Kolbenstange einstückig ausgebildet. Demzufolge sind für verschiedene Kolbenstangenlängen zur Bereitstellung unterschiedlicher Hübe verschiedene Gussformen notwendig, was sich wiederum negativ auf die Herstellungskosten auswirkt. Dabei sind die bekannten Kolbenstangen zwangsweise ebenfalls aus Aluminium- oder Zinkguss hergestellt, so dass diese ebenfalls der vorgenannten Gefahr einer Korrosion oder Alterung ausgesetzt sind.

Die WO97/18117 offenbart einen Federspeicherkolben für einen Federspeicherbremszylinder, insbesondere von Nutzfahrzeugen, welcher aus Kunststoff hergestellt ist. Bei der Verbindung einer beispielsweise aus Metall bestehenden Kolbenstange bzw. einem aus Metall bestehenden Kolben, beispielsweise einem Betriebsbremskolben mit einem aus Kunststoff bestehenden Federspeicherkolben ergibt sich häufig das Problem, dass der Kunststoffkolben aufgrund seiner höheren Nachgiebigkeit an der Verbindungsstelle zwischen beiden Teilen nachgibt und die Verbindung für eine Übertragung höherer Bremskräfte untauglich ist.

Demgegenüber besteht die Aufgabe der Erfindung darin, auf einfache Weise eine möglichst steife und feste Verbindung zwischen einer Kolbenstange bzw. einem Kolben und einem Federspeicherkolben aus Kunststoff zu schaffen.

Diese Aufgabe wird durch die Merkmale von Patentanspruch 1 gelöst.

Indem die durch die beiden Schultern gebildete, radial umlaufende Ringausnehmung des Federspeicherkolbens eine Aufnahme für eine Wandung der Kolbenstange bzw. des weiteren Kolbens bildet, ergibt sich in vorteilhafter Weise eine für die Kraftübertragung vorteilhafte, umlaufende Einbettung, was in einer insbesondere gegenüber radial wirkenden Kräften steifen und festen Verbindung zwischen der Kolbenstange bzw. dem Kolben und dem Federspeicherkolben resultiert. Weiterhin ist ein Verkanten des Federspeicherkolbens gegenüber der Kolbenstange bzw. gegenüber dem Kolben durch die Integration zwischen der ersten ringförmigen Schulter und der zweiten ringförmigen Schulter ausgeschlossen. Insbesondere können die Kolbenstange bzw. der Kolben und der Federspeicherkolben aus unterschiedlichen Materialien bestehen und als separate Bauteile aneinander lösbar oder unlösbar aneinander befestigt werden, beispielsweise durch Kleben.

Als Material zur Herstellung des Federspeicherkolbens wird Kunststoff ausgewählt. Dabei hat sich entgegen bestehender Vorurteile gegenüber Kunststoff als im Vergleich zu Aluminium oder Zink als für Federspeicherkolben unbrauchbar erachtetem Material in Tests überraschend gezeigt, dass mit einem Federspeicherkolben aus Kunststoff genauso gute Betriebseigenschaften erzielbar sind, wie bei herkömmlichen Federspeicherkolben. Weiterhin überraschend bleiben die damit erreichbaren Bremskräfte nicht hinter den mit herkömmlichen Federspeicherkolben erzielbaren Bremskräften zurück. Zudem liegt die Lebensdauererwartung eines Federspeicherkolbens aus Kunststoff wider Erwarten sogar über der Lebensdauererwartung eines herkömmlichen Federspeicherkolbens. Indem ein Federspeicherkolben aus Kunststoff vorgeschlagen wird, der beispielsweise als Kunststoffspritzgussteil hergestellt werden kann, können in vorteilhafter Weise die mit einer Kunststoffspritzgussform zu verwirklichenden, deutlich höheren Stückzahlen zur Steigerung der Produktivität genutzt werden, wobei Steigerungsraten gegenüber dem herkömmlichen Aluminium- oder Zinkguss um das 10 bis 20-fache ohne zusätzlichen Aufwand realisierbar sind. Darüber hinaus kann bei einer Herstellung des Federspeicherkolbens aus Kunststoff eine aufwendige Nachbearbeitung in aller Regel entfallen. Kunststoffspritzgussteile haben von Haus aus glatte Oberflächen. Grate, die nachträglich aufwendig entfernt werden müssten, treten bei Kunststoffspritzgussteilen üblicherweise nicht auf. Damit können die Herstellungskosten eines Federspeicherkolbens aus Kunststoff gegenüber den Herstellungskosten von herkömmlichen, aus Aluminium oder Zink gegossenen Federspeicherkolben, deutlich gesenkt werden. Darüber hinaus bietet die Auswahl von Kunststoff als Material zur Herstellung eines erfindungsgemäßen Federspeicherkolbens den weiteren Vorteil, dass ein Federspeicherkolben aus Kunststoff keiner nennenswerten Alterung oder gar einer Art Korrosion aufgrund möglicherweise vorhandener Feuchtigkeit ausgesetzt ist.

Ferner bietet die Verwendung von Kunststoff zur Herstellung des Federspeicherkolbens den weiteren Vorteil einer deutlichen Gewichtsreduzierung gegenüber der Aluminium- oder Zinkgusstechnologie. Dies reduziert den Aufwand hinsichtlich der Handhabung bei der Herstellung eines als Spritzgussteil aus Kunststoff hergestellten Federspeicherkolbens und hilft die Transportkosten der hergestellten Teile aufgrund deren geringerer Maße zu senken.

Weiterhin bietet ein Federspeicherkolben aus Kunststoff den zusätzlichen Vorteil, dass Sitze für Gleitringe, Dichtungen oder dergleichen bereits nach der Herstellung eine ausreichend hohe Oberflächengüte und/oder Sitzgenauigkeit aufweisen, dass die gerade bei herkömmlichen Alu- oder Zinkgussteilen aufwendige Einarbeitung von solchen Sitzflächen für Gleitringe, Dichtungen oder dergleichen entfallen kann, was sich wiederum sowohl in einer reduzierten Bearbeitungszeit als auch in einer Kostensenkung widerspiegelt.

Nicht zuletzt ermöglicht die Herstellung des erfindungsgemäßen Federspeicherkolbens aus Kunststoff eine bemerkenswerte Lärmreduzierung bei der weiteren Verarbeitung desselben, da ein Hohlkörper aus Kunststoff entgegen einem metallischen Hohlkörper keinen nennenswerten Lärm produzieren kann. Dieser Umstand macht sich insbesondere bei den mit der Integration des Bremszylinders betrauten Arbeitern in einer Steigerung der Arbeitsplatzqualität bemerkbar.

So weist die eine ringförmige Schulter in axialer Richtung eine definierte Längserstreckung auf, um dem Kolben bzw. der Kolbenstange einen ausreichenden Halt als auch eine optimale Führung zu geben. Diese Schulter dient als Anlagefläche für einen einzufügenden Kolben bzw. eine einzufügende Kolbenstange. Damit wird in vorteilhafter Weise sichergestellt, dass Kolben bzw. Kolbenstange und Federspeicherkolben eine vordefinierte Lage zu einander exakt einhalten.

Diese Lagegenauigkeit wird weiter erhöht, indem an einem Aufnahmeabschnitt des Federspeicherkolbens zur Aufnahme des Kolbens bzw. der Kolbenstange die beispielsweise einstückig daran angeformte, zweite ringförmige Schulter zum Eingriff in eine entsprechende Ausnahme des Kolbens bzw. zum Eingriff in die rohrförmige Kolbenstange vorgesehen ist. Dabei sind neben rohrförmigen Schultern auch Schultern mit anderen Querschnitten einsetzbar.

Darüber hinaus kann bei einer weiter bevorzugten Ausführungsform der Federspeicherkolben sich parallel zur Längsachse des Federspeicherzylinders erstreckende Stützelemente aufweisen. Diese sind beispielsweise ringförmig angeordnet und bevorzugt am Federspeicherkolben einstückig an der zweiten ringförmigen Schulter angeformt. Die Stützelemente können dabei in eine entsprechende Ausnahme des Kolbens bzw. in die rohrförmige Kolbenstange eingreifen. Dies erhöht weiterhin die Lagestabilität des Kolbens bzw. der Kolbenstange in Relation zum Federspeicherkolben und kann die Verbindung zwischen diesen beiden Bauteilen weiter versteifen. Zudem kann auf diese Weise vorteilhaft Material eingespart werden, wenn die innere ringförmige Schulter sich in axialer Richtung erstreckende Zungen oder Laschen aufweist, anstelle einer ebenfalls denkbaren vollwandigen, rohrförmigen oder zylindrischen Ausgestaltung. Die Zungen oder Laschen können ihrerseits vorteilhaft zugleich als Aufnahme für eine standardisierte, kurze Lösevorrichtung dienen, so dass selbige möglichst platzsparend in den Federspeicherkolben integriert werden kann.

Für eine optimale Kraftein- und/oder -überleitung vom Federspeicherkolben in die Kolbenstange bzw. den Kolben sind in einer weiter vorteilhaften Ausführungsform radial verlaufende Stege als Verstärkungsrippen im Kraftumleitungsbereich vorgesehen.

Des weiteren wird bei einer bevorzugten Ausführungsform vorgeschlagen, den Kolben bzw. die Kolbenstange aus Kunststoff, insbesondere extrudiert, herzustellen. Indem nicht nur der Federspeicherkolben aus Kunststoff hergestellt, sondern auch noch als separates, von der Kolbenstange getrenntes Bauteil vorgeschlagen wird, können in vorteilhafter Weise durch die freie Kombinierbarkeit eines bestimmten Federspeicherkolbentyps mit einer Vielzahl von sich beispielsweise in der Länge oder dem Durchmesser unterscheidenden Kolben oder Kolbenstangen, eine Mehrzahl von Federspeicherkolben mit integriertem Kolben bzw. integrierter Kolbenstange unterschiedlichsten Hubs ohne zusätzliche Kosten hergestellt werden. Zudem lässt sich der erfindungsgemäße Federspeicherkolben als separates Teil leichter einbauen und zeichnet sich dabei durch eine einfachere Handhabung aus. Darüber hinaus können für den Kolben bzw. die Kolbenstange bei Bedarf auch weiterhin Materialien wie Aluminium oder Zinkguss Verwendung finden. Damit können in vorteilhafter Weise vorhandene Kolbenstangen weiter verwendet werden, was in der Herstellung eine zusätzliche Kostensenkung mit sich bringt.

Die Erfindung wird nachfolgend anhand einer beispielhaften Ausführungsform unter Bezugnahme auf die Figuren der Zeichnung näher erläutert. Es zeigen:
- Fig. 1: eine dreidimensionale, aufgeschnittene Seitenansicht eines erfindungsgemäßen Federspeicherkolbens mit darin integrierter Kolbenstange, und
- Fig. 2: den mittleren Bereich des in Fig. 1 gezeigten Federspeicherkolbens in einer geschnittenen, vergrößerten Darstellung.

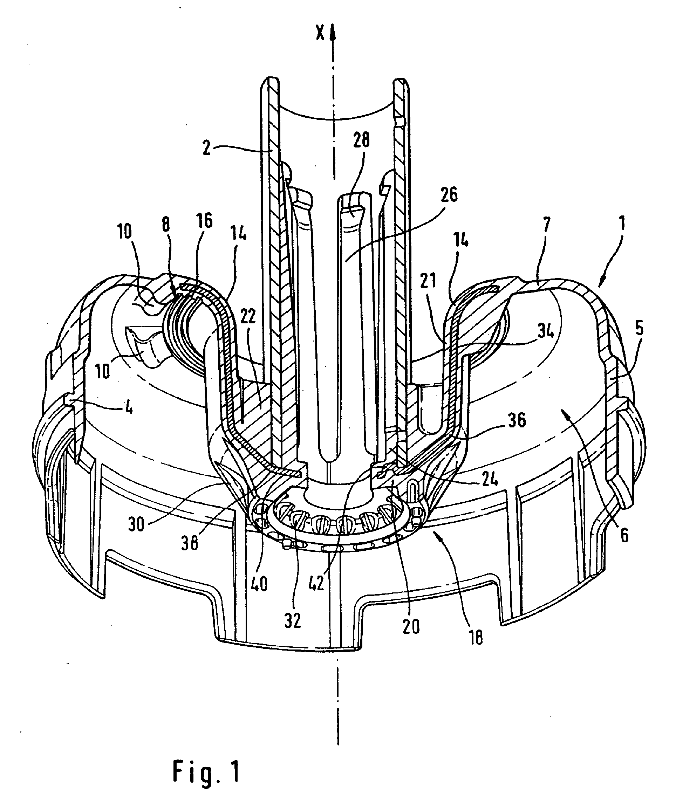

In Fig. 1 ist eine dreidimensionale Schnittansicht einer beispielhaften Ausführungsform eines erfindungsgemäßen Federspeicherkolbens 1 dargestellt. Der aus Kunststoff hergestellte Federspeicherkolben 1 weist eine eingefügte Kolbenstange 2 auf, deren Länge je nach gefordertem Hub angepasst sein kann und die aus einem geeigneten Material, wie z. B. Aluminium oder Zink oder beispielsweise als extrudiertes Teil aus Kunststoff hergestellt sein kann. Am äußeren Umfang des Federspeicherkolbens 1 ist ein ringförmig umlaufender nach außen ausgestülpter Steg 4 erkennbar. Der Steg 4 kann als Schulter zur Abstützung eines nicht näher dargestellten Gleitringes dienen oder beispielsweise selbst als Gleitring funktionieren. Ferner können sich gegen den Steg 4 erforderlichenfalls nicht näher dargestellte Dichtungen abstützen. Der radial äußere, umlaufende Abschnitt der Federspeicherkolbenwandung kann insofern auch als Führungsabschnitt 5 bezeichnet werden. Innerhalb des vom Führungsabschnitt 5 radial begrenzten, ringförmigen Hohlraumes 6 des Federspeicherkolbens 1, der in axialer Richtung X wiederum durch den sogenannten Kolbentellerabschnitt 7 begrenzt wird, befindet sich die in Fig. 1 nicht näher dargestellte Speicherfeder. Deren letzte Windung stützt sich gegen den Auflagebereich bzw. die Auflagefläche 8 ab. Zur Ableitung radialer Kräfte der nicht näher dargestellten Speicherfeder sind Höcker oder Schultern bzw. Schulterabschnitte 10 vorgesehen, die in das innere des Federspeicherkolbens 1 hinein ragen, also dem Hohlraum 6 zugewandt sind. Die Auflagefläche 8 ist des weiteren in dieser Ausführungsform profiliert ausgebildet.

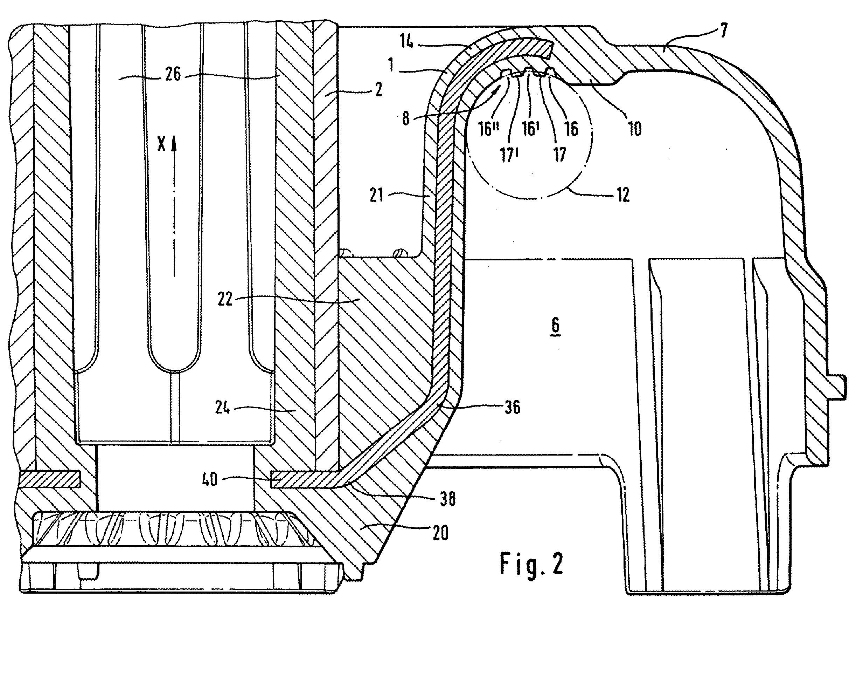

Wie insbesondere aus Fig. 2, einer vergrößerten Detailansicht von Fig. 1, erkennbar ist, liegt die dort im Schnitt gezeigte, letzte Windung der Speicherfeder 12 radial innen an der gebogen verlaufenden Kontur 14 des Federspeicherkolbens 1 an.

Zudem liegt die letzte Windung der Speicherfeder 12 radial auswärts an der Schulter 10 an. In axialer Richtung X des Federspeicherkolbens 1 liegt die Speicherfeder 12 formschlüssig an der Innenkontur des Federspeicherkolbens 1 an, wobei die Anlagefläche 8 in diesem Bereich profiliert ist. In der hier dargestellten Ausführungsform weist die Anlagefläche 8 drei ringförmig umlaufende Nuten 16, 16' und 16" auf, zwischen denen sich Stege 17 bzw. 17' befinden, die in die Kontur der anliegenden Speicherfeder 12 hineinragen und vorzugsweise vertormbar sind, was eine Anpassung der Anlagefläche 8 an die Kontur der Speicherfeder beim Einlaufen des Federspeicherbremszylinders erlaubt. Auf diese Weise wird sichergestellt, dass die von herkömmlichen Federspeicherkolben bekannten, üblicherweise nicht vollständig vermeidbaren radialen Kräfte der Speicherfeder 12, zumindest so in den Federspeicherkolben 1 abgeleitet werden können, dass keine negativen Auswirkungen auf in radialer Richtung üblicherweise nur geringfügig belastete Dichtungen befürchtet werden müssen, oder dass im Idealfall eine Entstehung dieser radialen Kräfte weitestgehend vermieden wird.

In Fig. 1 ist der einen Kolben bzw. die Kolbenstange 2 aufnehmende, innere Abschnitt des Federspeicherkolbens 1 als Bereich 18 bezeichnet. Dieser weist einen ringförmig umlaufenden Sitz 20 auf, der radial nach außen in die die Speicherfeder umschließende Kolbenwandung übergeht, die vereinzelt auch als Kolbenhemd bezeichnet wird. Deren radial innerer Abschnitt ist mit der Bezugsziffer 21 versehen. Gegen den ringförmigen Sitz 20 stützt sich die Kolbenstange 2 ab. Dabei ist die Kolbenstange 2 von einer ringförmigen Schulter 22 von außen her gehalten. Eine weitere ringförmige Schulter 24 stützt die Kolbenstange 2 von innen ab. An die innere Schulter 24 schließen sich einstückig angeformte Zungen oder Laschen 26 an, die sich in axialer Richtung X erstrecken. Bei der hier dargestellten Ausführungsform sind sechs solcher Laschen 26 vorgesehen. Anstelle dieser Laschen 26 könnte auch eine rohrförmige Verlängerung der ringförmigen Schulter 24 vorgesehen werden. Die Laschen 26 bieten jedoch den Vorteil der Materialersparnis und können eine gewisse federnde Vorspannung erzeugen. Innerhalb des durch die Kolbenstange 2 und die Laschen 26 definierten Hohlraumes kann eine nicht näher dargestellte Lösevorrichtung integriert werden. Diese kann sich dann gegen die Ausnehmungen 28 der Laschen 26 abstützen. Die Ausnehmungen 28 können auch als Widerlager für Spannmittel dienen. Zur Verstärkung des ringförmigen Sitzes 20 weist dieser radial orientierte innere als auch äußere Stützrippen 30 bzw. 32 auf.

Bei der sowohl in Fig. 1 als auch in Fig. 2 (vergrößerter Ausschnitt von Fig. 1) dargestellten Ausführungsform eines beispielhaften erfindungsgemäßen Federspeicherkolbens 1 ist eine Einlage 34 zur Verstärkung des Kolbenhemdes vorgesehen. Die Verstärkung 34 kann aus einem auf Zug besonders gut belastbaren Material, wie beispielsweise Stahl oder dgl. als Stahleinlage hergestellt sein. Hierbei folgt die Einlage 34 der Kontur des Kolbenhemdes. Sie beginnt mit einer gekrümmten Kurvenlinie im Bereich der entsprechenden, gekrümmten Kontur 14 der Wandung des Federspeicherkolbens 1 und verläuft dort anschließend näherungsweise achsparallel zur Längsrichtung bzw. Hauptaxialrichtung des Federspeicherkolbens 1 oder unter einem bestimmten Winkel leicht dazu geneigt und knickt dann in einem ersten Bereich 36 um etwa 45° ab, um in einem weiteren Abschnitt 38 nochmals um etwa 45° abzuwinkeln und in einem ringförmigen Abschnitt 40 zu enden. Die Einlage 34 ist dabei bis auf kleine Teilbereiche fast vollständig von der Wandung des Federspeicherkolbens 1 insbesondere von der Wandung des Kolbenhemdes umschlossen. Herstellungstechnisch wird dies dadurch erreicht, dass die Einlage 34 bei der Herstellung des Federspeicherkolbens 1 mit Kunststoff umspritzt wird. Die Stahleinlage 34 weist im Endbereich 40, in dem sie in der Stütze 20 endet, wenigstens eine nasenartige Ausstülpung oder Schulter 42 auf, die zur Zentrierung mit der Kolbenstange 2 dient. Die Kolbenstange 2 stützt sich im Federspeicherkolben 1 stimseitig gegen den Endabschnitt 40 der Stahleinlage 34 ab. Eine von der Speicherfeder 12 im Auflagebereich 8 eingeleitete Kraft wird über das Kolbenhemd und die darin integrierte Stahleinlage 34 in den ringförmigen Sitz 20 übertragen und von diesem auf die Kolbenstange 2 weitergeleitet.

Ein Verkanten des Federspeicherkolbens 1 gegenüber der Kolbenstange 2 ist durch die Integration der Kolbenstange 2 innerhalb der ringförmigen Schulter 22 und der zweiten ringförmigen Schulter 24 als auch der Laschen 26 ausgeschlossen. Die äußere Kontur bzw. der Führungsabschnitt 5, der Kolbentellerabschnitt 7 als auch das Kolbenhemd des Federspeicherkolbens 1 sind mit der ringförmigen Schulter 22 und der ringförmigen Schulter 24 als auch den Laschen 26 aus einem Stück in Kunststoff hergestellt, was sowohl in Fig. 1 als auch Fig. 2 durch die Verwendung einer einheitlichen Schraffur versinnbildlicht ist.

Die vorliegende Erfindung schafft damit erstmals einen Federspeicherkolben, der beispielsweise in Spritzgusstechnik aus Kunststoff hergestellt ist. Darüber hinaus ist der erfindungsgemäße Federspeicherkolben im Bereich des Anschlusses zur Kolbenstange so ausgestaltet, dass ein Verkanten des Federspeicherkolbens gegenüber der Kolbenstange ausgeschlossen ist und eine feste Verbindung zwischen Federspeicherkolben und Kolbenstange sichergestellt ist. Zudem weist der erfindungsgemäße Federspeicherkolben weiterhin eine Verstärkungseinlage auf, mittels der deutlich höhere Kräfte bei kleineren Wandungsstärken übertragen werden können als bei herkömmlichen Federspeicherkolben. Nicht zuletzt ist der Sitz bzw. die Anlagefläche im Federspeicherkolben zur Abstützung der Speicherfeder so ausgebildet, dass möglicherweise auftretende radiale Kräfte keinen negativen Einfluss auf die Funktionalität des Federspeicherkolbens haben.

## Patentansprüche

1. Federspeicherbremszylinder mit einem Federspeicherkolben (1), welcher aus Kunststoff hergestellt und mit einer separaten Kolbenstange (2) oder einem separaten Kolben verbunden ist, **dadurch gekennzeichnet, dass** die Kolbenstange (2) oder der Kolben radial zwischen einer ersten ringförmigen Schulter (22) und einer zweiten ringförmigen Schulter (24) des Federspeicherkolbens (1) aufgenommen ist.

2. Federspeicherbremszylinder nach Anspruch 1, **dadurch gekennzeichnet, dass** der Federspeicherkolben (1) zusammen mit der ersten ringförmigen Schulter (22) und der zweiten ringförmigen Schulter (24) als einstückiges Bauteil ausgeführt ist.

3. Federspeicherbremszylinder nach Anspruch 1 oder 2, **dadurch gekennzeichnet, dass** die Schulter (22) eine definierte Längserstreckung in axialer Richtung (X) aufweist.

4. Federspeicherbremszylinder nach einem der vorhergehenden Ansprüche, **dadurch gekennzeichnet, dass** der Federspeicherkolben (1) sich parallel zur Längsachse des Federspeicherbremszylinders erstreckende Stützelemente (28) aufweist, die ringförmige angeordnet und am Federspeicherkolben (1) einstückig an der zweiten ringförmigen Schulter (24) angeformt sind, wobei die Stützelemente (28) in den Kolben oder die Kolbenstange (2) eingreifen.

5. Federspeicherbremszylinder nach einem der vorhergehenden Ansprüche, **dadurch gekennzeichnet, dass** die Kolbenstange (2) aus Aluminium, insbesondere extrudiert, hergestellt ist.

6. Federspeicherbremszylinder nach einem der vorhergehenden Ansprüche, **dadurch gekennzeichnet, dass** eine Einlage (34), insbesondere aus Stahl, mit in die Wandung des Federspeicherkolbens (1) eingeformt ist, welche eine Auflagefläche für die Stirnseite der Kolbenstange (2) oder des Kolbens aufweist.

7. Federspeicherbremszylinder nach Anspruch 6, **dadurch gekennzeichnet, dass** die Einlage (34) von einem Kolbentellerabschnitt (7), vorzugsweise von einem einer Anlagefläche (8) einer Speicherfeder (12) benachbarten Krafteinleitungsbereich in den Federspeicherkolben (1) bis zu einem in einem ringförmigen Kolbenzentrum (20) angeordneten Kraftüberleitungsbereich vom Federspeicherkolben (1) zum Kolben oder zur Kolbenstange (2) reicht.

## Claims

1. Spring-loaded brake cylinder comprising a spring-loaded piston (1) that is made of a synthetic material and connected to a separate piston rod (2) or a separate piston, **characterised in that** said piston rod (2) or said piston is accommodated radially between a first annular shoulder (22) and a second annular shoulder (24) of said spring-loaded piston (1).

2. Spring-loaded brake cylinder according to Claim 1, **characterised in that** said spring-loaded piston (1) together with said first annular shoulder (22) and said second annular shoulder (24) is designed as integral component.

3. Spring-loaded brake cylinder according to Claim 1 or 2, **characterised in that** said shoulder (22) presents a defined longitudinal extension along the axial direction (X).

4. Spring-loaded brake cylinder according to any of the preceding Claims, **characterised in that** said spring-loaded piston (1) comprises supporting elements (28) extending in parallel with the longitudinal axis of the spring-loaded brake cylinder, which are disposed in an annular arrangement and are integrally formed on said second annular shoulder (24) on said spring-loaded piston (1), with said supporting elements (28) being engaged in said piston or said piston rod (2).

5. Spring-loaded brake cylinder according to any of the preceding Claims, **characterised in that** said piston rod (2) is made of aluminium, specifically by extrusion.

6. Spring-loaded brake cylinder according to any of the preceding Claims, **characterised in that** an insert (34), made of steel in particular, is also integrally formed in the wall of said spring-loaded piston (1), which insert presents a supporting surface for the front face of said piston rod (2) or said piston.

7. Spring-loaded brake cylinder according to Claim 6, **characterised in that** said insert (34) reaches from a piston disc section (7), preferably from a zone where forces are introduced into said spring-loaded piston (1), which zone is adjacent to a bearing surface (8) of an accumulator spring (12), up to a zone disposed in an annular piston centre (20), where forces are transferred from said spring-loaded piston (1) to said piston or said piston rod (2).

## Revendications

1. Cylindre de frein à ressort accumulateur, comprenant un piston (1) à ressort accumulateur, qui est en matière plastique et qui est relié à une tige (2) de piston distincte ou à un piston distinct, **caractérisé en ce que** la tige (2) le piston ou le piston est reçu radialement entre un premier épaulement (22) annulaire et un deuxième épaulement (24) annulaire du piston (1) à ressort accumulateur.

2. Cylindre de frein à ressort accumulateur suivant la revendication 1, **caractérisé en ce que** le piston (1) à ressort accumulateur est réalisé en une seule pièce ensemble avec le premier épaulement annulaire et le deuxième épaulement (24) annulaire.

3. Cylindre de frein à ressort accumulateur suivant la revendication 1 ou 2 **caractérisé en ce que** l'épaulement (22) a une étendue longitudinale définie dans la direction (X) axiale.

4. Cylindre de frein à ressort accumulateur suivant l'une des revendications précédentes, **caractérisé en ce que** le piston (1) à ressort accumulateur a des éléments (28) d'appui, qui s'étendent parallèlement à l'axe longitudinal du cylindre de frein à ressort accumulateur, qui sont disposés annulairement et qui sont formés sur le piston (1) à ressort accumulateur d'une seule pièce avec le deuxième épaulement (24) annulaire, les éléments (28) d'appui pénétrant dans le piston ou dans la tige (2) de piston.

5. Cylindre de frein à ressort accumulateur suivant l'une des revendications précédentes, **caractérisé en ce que** la tige (2) de piston est en aluminium, en étant notamment extrudée.

6. Cylindre de frein à ressort accumulateur suivant l'une des revendications précédentes, **caractérisé en ce qu'**un insert (34), notamment en acier, est incorporé à la paroi du piston (1) à ressort accumulateur et a une surface d'appui pour la face frontale de la tige (2) de piston ou du piston.

7. Cylindre de frein à ressort accumulateur suivant la revendication 6, **caractérisé en ce que** l'insert (34) d'une partie (7) de plateau de piston, de préférence d'une zone d'application des forces voisine d'une surface (8) d'appui d'un ressort (12) accumulateur du piston (1) à ressort accumulateur, va jusqu'à une zone de transmission de forces, disposée dans un centre (20) annulaire du piston, du piston (1) à ressort accumulateur vers le piston ou la tige (2) de piston.
